# EUROPEAN PATENT SPECIFICATION

(11) **EP 0 911 091 B1**
(45) Date of publication and mention of the grant of the patent: **29.12.2004**
(21) Application number: 98118556.4
(22) Date of filing: 01.10.1998
(51) Int. Cl.: B21B 35/14, B21B 31/26, B29C 55/18

(54) **Wire rolling apparatus**
Drahtwalzvorrichtung
Dispositif de laminage de fils

(30) Priority: 21.10.1997 JP 28825797
(43) Date of publication of application: 28.04.1999
(73) Proprietor: YKK CORPORATION, Chiyoda-ku, Tokyo (JP)
(72) Inventor: Matsushima, Haruo, Kurobe-shi, Toyama-ken (JP)
(74) Representative: Casalonga, Axel

(56) References cited:
- EP-A- 0 074 884
- DE-A- 2 446 905
- DE-A- 2 555 446
- DE-A- 3 217 448
- DE-C- 742 990
- GB-A- 2 089 259
- US-A- 838 396
- US-A- 3 666 853

## Description

This invention relates to a wire rolling apparatus adapted to roll a wire such as a synthetic resin monofilament or a metal wire and make it show an elliptic or flat cross section over the entire length thereof and/or press it intermittently to produce longitudinally local recesses.

### [Prior Art]

Applicable fields of a rolling apparatus of the above identified type include facilities for manufacturing synthetic resin engaging elements of slide fasteners and those for rolling round metal wires to produce flat wires to be used as parts of electric devices.

For instance, the synthetic resin engaging elements of slide fasteners are typically produced by extruding a monofilament out of molten thermoplastic resin and forming the monofilament into series of continuous engaging elements having a particular coil-shaped or zig-zag-shaped profile. Each engaging element comprises an engaging head, legs extending from opposite ends of the engaging head and a link portion for linking the engaging head with adjacent engaging heads respectively by way of said legs and the monofilament is plastically deformed to produce engaging elements having their engaging heads arranged in a line and shows a coil-shaped or zig-zag-shaped profile. Normally, a round monofilament is rolled over the entire length to show an elliptic cross section before forming engaging heads, legs and link portions. Then, the rolled monofilament is intermittently pressed to locally produce flat engaging heads and bent areas of the link portions. The wire rolling apparatus is typically used to produce engaging elements in a manner as described above.

Generally, the above described rolling operation is performed by means of a pair of rollers that are separated from each other by a given distance and have a smooth surface or a surface with local projections so that a round wire is flattened or made to show local recesses as it is forced to pass between the rollers.

Known rolling apparatus for rolling monofilament for forming engaging elements of slide fasteners typically comprise two pairs of vertically arranged rollers that are driven by a single drive source by way of a single main shaft, the drive section and the follower section of each of the rollers being connected with each other by way of an intermediate gear. For replacing the monofilament with a new one or with a monofilament of a different type or for changing the number of revolutions per unit time of the rollers, the operation of the apparatus has to be stopped temporarily to remove the intermediate gear and then the rollers have to be driven manually before putting a new monofilament through. The operation of the apparatus will also have to be stopped for replacing the drive gear of the rollers. Thus, the drive system of the rollers is provided with a handle for manually operating the rollers.

For replacing the processed monofilament with a new one of a different size, the gap between the vertically arranged rollers has to be reset. Thus, the known rolling apparatus is typically provided with a multi-stage regulation mechanism for vertically positionally regulating the opposite ends of the spindle of the upper roller along a guide section.

However, such known apparatus have certain major drawbacks. Firstly, the rolling operation of the apparatus has to be suspended and the intermediate gear has to be removed for replacing the monofilament spool. Then, after placing a new monofilament in position by maneuvering the handle, the intermediate gear has to be put back in position to complete the spool replacing operation. While such a procedure may be necessary for replacing the drive gear of the rollers, it is cumbersome and can greatly reduce the productivity of the processing line if the procedure has to be followed simply for replacing the spool. Particularly, the operation of putting back the intermediate gear requires accuracy and misalignment of the gear can occur to make the gear wheels awkwardly engage with each other and give rise to a significant backlash if such operation is repeated frequently so that the monofilament may be fed inaccurately to adversely affect the quality of the finished product.

Secondly, when replacing the monofilament with a new one of a different size, the gap between the upper and lower rollers have to be adjusted as pointed out above. However, with the conventional regulating procedure, the rolling operation of the apparatus has to be suspended and typically the upper roller has to be vertically moved along the guide section to secure the right distance between the rollers by rigidly holding a sliding wedge at the end of the shaft. Such a regulating procedure is time consuming and takes a very long time before the rolling operation is resumed.

DE 24 46 905 A discloses a wire rolling apparatus comprising a a rotary drive system having a pair of handles as part thereof and intermediate gears for transmitting the driving rotation from a drive source to upper and lower rollers by way of said intermediate gears, whereby said rotary drive system is constituted by a pair of laterally arranged drive system components and the revolution of a single main shaft is transmitted to said rotary drive system components by way of a main gear; said handles are connected to said main shaft by way of respectiv coupling portions; and each of said handles is provided with an interrupting means for interrupting the connection between the corresponding coupling portion and the main shaft. It is the object of the present invention to provide a rolling apparatus with which the monofilament or wire can be replaced rapidly and efficiently and the gap between the upper and lower rollers can be regulated with ease without suspending the rolling operation and removing the intermediate gear.

### SUMMARY OF THE INVENTION

According to the invention, the above object is achieved by providing a wire rolling apparatus comprising a rotary drive system having a pair of handwheels as part thereof and intermediate gears for transmitting the driving rotation from a drive source to laterally arranged pairs of upper and lower rollers by way of the intermediate gears, wherein the rotary drive system is constitued by a pair of laterally arranged drive system components and the revolution of a single main shaft is transmitted to the rotary drive system components by way of a main gear, the handwheels being connected to the main shaft by way of respective coupling portions, each of the handwheels being provided with an interrupting means for interrupting the connection between the corresponding coupling portion and the main shaft. As claimed, pairs of said laterally arranged upper and lower rollers are coupled/uncoupled selectively to said main shaft and in that an uncoupled pair of said upper and lower rollers is rotatable manually by means of said hand wheels.

With the above arrangement, for replacing the wire with a new one of a different type or replacing the spool, the operation of the apparatus is temporarily slowed down and the interrupting means of the coupling portion on the side where the wire has to be replaced is operated to disconnect the handwheel and the main shaft of that side. Thus, the inconvenience of conventional apparatus of undesiredly rotating the unnecessary drive system component when the handle resp. handwheel is operated can be avoided. To the contrary, it is now possible to drive only the selected one of the drive system components and hence the corresponding roller to rotate by means of the handwheel and allow a new wire to pass between the rollers. Additionally, since it is now possible to interrupt the connection between one of the handwheels and the main shaft without affecting the coupling portion on the side of the other handwheel, the drive system components of the other side is not moved simultaneously and hence the handwheel can be operated very lightly.

Therefore, while the handwheels has to be operated to position the intermediate gear or to regulate the alignment of the engagement of gear wheels after replacing the intermediate gear and putting it back in position, the handwheel operation can be performed lightly, and hence accurately and quickly without giving rise to any problems such as a backlash.

Preferably, each of the coupling portions has an interrupting mechanism realized by the mutual engagement of a gear wheel rigidly secured to the main shaft and a coupling wheel slidable on the main shaft and each of the interrupting means comprises an maneuvering lever adapted to abut an end of a plunger slidable along the axis of the corresponding handle in order to reciprocally drive the plunger along the axis.

With this arrangement, the plunger can be moved to slide along the axis of the handwheel by operating the maneuvering lever to remove the coupling wheel operating in connection with the plunger from the gear rigidly secured to the main shaft so that the connection and disconnection at the coupling portion can be done by a simple operation.

Additionally it may be so arranged that the maneuvering lever is coupled to the handwheel by means of a pin and the surface of the maneuvering lever abutting the plunger is realized in the form of a cam surface, the plunger as well as the coupling wheel being urged toward the maneuvering lever.

With the above arrangement, the plunger and the coupling wheel elastically urged against the cam surface of the maneuvering lever can be made to slide along the main shaft simultaneously by raising and putting back the maneuvering lever around the pivot pin in order to reliably and restorably release the coupling wheel from the gear.

Preferably the roller shaft of at least one of the upper and lower rollers is rotatably supported by an eccentric member and the vertical relative positions of the upper and lower rollers can be regulated by rotating the eccentric member.

With the above arrangement, whenever the gap separating the upper and lower rollers needs to be regulated, the roller rotatably supported by the eccentric member is moved vertically by a desired amount by rotating the eccentric member by a corresponding amount after temporarily slowing down the operation of the rolling apparatus.

Preferably, the eccentric member is composed of a sleeve which is supported by the frame of the rolling apparatus so as to be rotatable around a horizontal axis and has the axis of the internal bore for receiving the roller shaft by way of respective bearings and the axis of the external contour eccentrically arranged relative to each other.

With this arrangement, the eccentric member is realized in the form of a sleeve having a simple profile and the eccentricity of the sleeve can be changed continuously so that the gap separating the upper and lower rollers can be regulated continuously and smoothly in a desired manner.

Additionally, it may be so arranged that the sleeve has a worm gear at an end thereof and a worm is provided which is rigidly secured to the frame and held in engagement with the worm gear to rotate it by a desired angle.

With this arrangement, the sleeve can be rotated simply by rotating the worm rigidly secured to the frame so that the gap between the upper and lower rollers can be regulated accurately in a very simple manner.

### BRIEF DESCRIPTION OF THE DRAWINGS

FIG. 1 is a schematic front view of an embodiment of wire rolling apparatus partly cut away to show the inside.
FIG. 2 is a schematic side view of the embodiment of FIG. 1.
FIG. 3 is a fragmentary cross sectional view of the coupling section of the embodiment of FIG. 1 in a connected state.
FIG. 4 is a fragmentary cross sectional view of the coupling section similar to FIG. 3 but showing it in a disconnected state.
FIG. 5 is a schematic cross sectional view of diagrammatically showing the eccentric member.

### DESCRIPTION

Now, the present invention will be described in greater detail by referring to the accompanying drawings that illustrate an embodiment of wire rolling apparatus according to the invention.

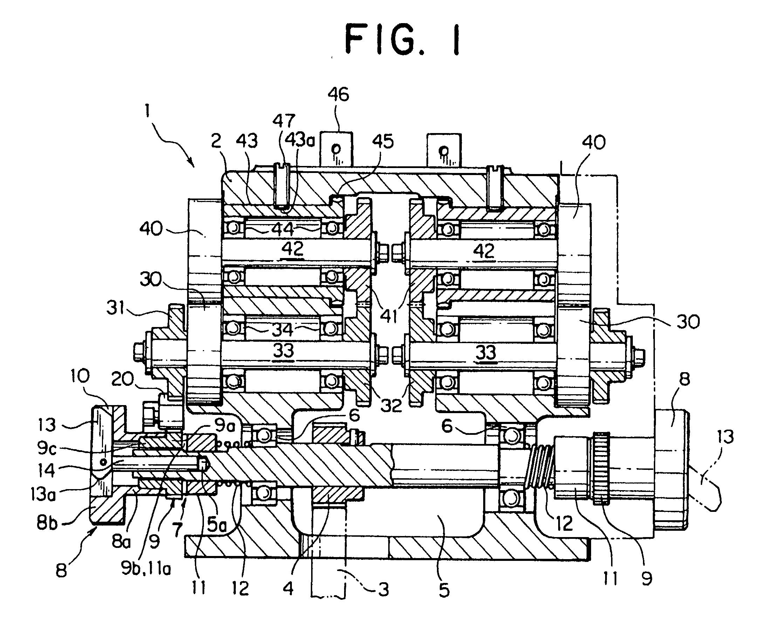

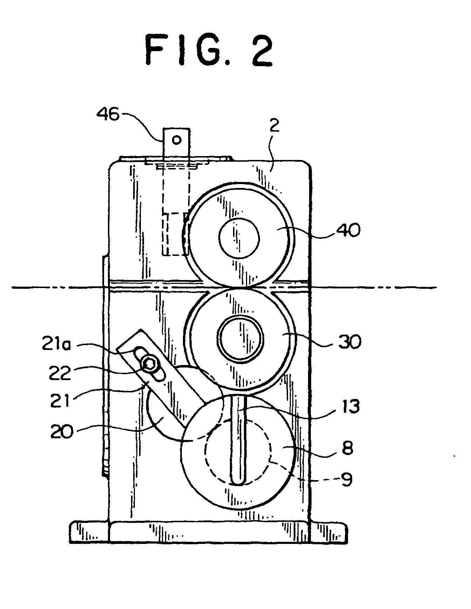

FIG. 1 is a schematic partially cross sectional view showing the drive mechanism of an embodiment of rolling apparatus for rolling a thermoplastic synthetic resin monofilament to form continuous engaging elements that can be used in a slide fastener manufacturing facility. FIG. 2 is a side view of the embodiment of FIG. 1.

In the illustrated embodiment, the rolling apparatus includes a pair of rolling mechanisms because a pair of monofilaments for engaging elements are rolled simultaneously, when it is applied to a slide fastener manufacturing facility.

Referring to FIGS. 1 and 2 schematically illustrating the rolling apparatus 1, it comprises a frame 2 and a main shaft 5 supported at part of the frame 2 by means of a pair of laterally arranged bearings 6, 6 so that the rotary force output from a drive source (not shown) disposed at the bottom of the frame 2 is transmitted to the main shaft 5 by way of a timing belt 3 and a main gear 4. The main shaft 5 has a pair of lateral coupling portions 7, 7 arranged respectively at the opposite ends thereof and a pair of handwheels 8, 8 fitted respectively to the corresponding ends of the coupling portions 7, 7.

The main gear 4 is keyed to about the middle of the main shaft 5 and a pair of first gears 9, 9 are rigidly fitted to the respective opposite ends of the main shaft 5. Each of the first gears 9, 9 comprises a cylindrical member having a flange portion 9a that carries outer teeth arranged on the outer peripheral surface thereof and a peripheral pawl 9b arranged at the inner end surface oppositely disposed to that of the other first gear 9. An axle 8a of the corresponding handle 8 is externally and rigidly fitted on the peripheral surface of the cylindrical portion 9c. A coupling wheel 11 having an engaging pawl 11a that is to be engaged with the pawl 9b of the corresponding first gear 9 is slidably keyed into a key groove of the main shaft 5 and a compression spring 12 is arranged between the coupling wheel 11 and the bearing 6 to constantly urge the coupling wheel 11 toward the pawl 9b of the first gear 9.

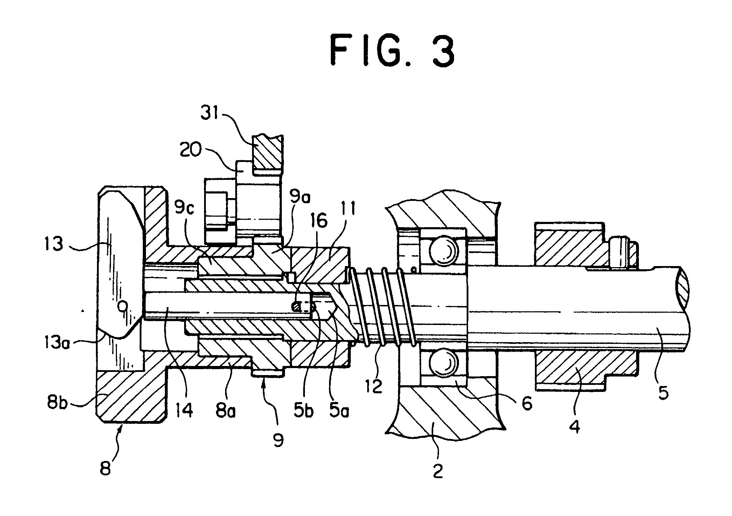

The handwheel 8 has a disc-shaped maneuvering portion 8b provided with a radial groove 10 for pivotally supporting an end of a coupling switch lever 13. On the other hand, the main shaft 5 has at the center of each of its opposite ends a blind hole 5a for slidably receiving a plunger 14. An oblong hole 5b (see FIG. 3) elongated along the blind hole 5a is formed across the blind hole 5a at a position near the bottom of the blind hole 5a.

The outer end surface of the plunger 14 abuts the pivotal end of the coupling switch lever 13 whereas the inner end surface of the plunger 14 is linked to the coupling wheel 11 by means of a link pin 15 inserted into the oblong hole 5b. Thus, the coupling wheel 11 is adapted to slidingly move in the key groove of the main shaft 5 as the plunger 14 slidingly moves in the blind hole 5a. The surface of the coupling switch lever 13 abutting the plunger 14 is in the form of a cam surface 13a so that as the coupling switch lever 13 is pivoted, it drives the plunger 14 to slidingly move in the blind hole 5a by means of its cam surface 13a.

When the coupling switch lever 13 lies flat in the groove 10 of the handwheel 8, the coupling wheel 11 is moved slidingly in the key groove of the main shaft 5 by the resilient force of the compression spring 12 as shown in FIG. 3 toward the handwheel 8 so that the plunger 14 is also moved to slidingly move toward the handwheel 8 and the pivot of the coupling switch lever 13 until it abuts the corresponding lateral surface of the coupling switch lever 13. Thus the engaging pawl 11a of the coupling wheel 11 comes into engagement with the pawl 9b of the first gear 9 to transmit the rotation of the main shaft 5 to the first gear 9.

Then, as the coupling switch lever 13 is raised from the groove 10 of the handwheel 8, the cam surface 13a formed at the pivotal end of the coupling switch lever 13 pushes the corresponding end surface of the plunger 14 to drive the plunger 14 to slidingly move in the blind hole 5a toward the gear 4. At the same time, the coupling wheel 11 linked to the plunger 14 by means of the link pin 15 is also moved in the key groove of the main shaft 5 toward the gear 4 against the resilient force of the compression spring 12. As a result, the engaging pawl 11a of the coupling wheel 11 and the pawl 9b of the first gear 9 are released from each other so that the rotation of the main shaft 5 is no longer transmitted to the first gear 9.

The first gears 9, 9 rigidly fitted to the opposite ends of the main shaft 5 are held in engagement with respective second gears 31, 31, each of which is removably secured to an end of the corresponding axle of a lower roller 30 by way of an intermediate gear 20. The center of each of the intermediate gears 20, 20 is positionally adjustable as shown in FIG. 2 so that the first gear 9 and the second gear 31 linked to it may be released from it when replacing the second gear 21. More specifically, the intermediate gear 20 is pivotally supported at an end of a support member 21 in the form of a rectangular plate and an oblong hole 21a is formed at the opposite end of the support member 21. On the other hand, a tapped hole (not shown) is formed near the corresponding second gear 31 of the frame 2 for receiving a bolt 22 to be screwed through the oblong hole 21a of the support member 21. For positionally adjusting the intermediate gear 20, the bolt 22 is loosened and the support member 21 is moved along the oblong hole 21a. Then, after correctly positioning the intermediate gear 20, the bolt 22 is screwed into the tapped hole to securely hold the support member 21 in position.

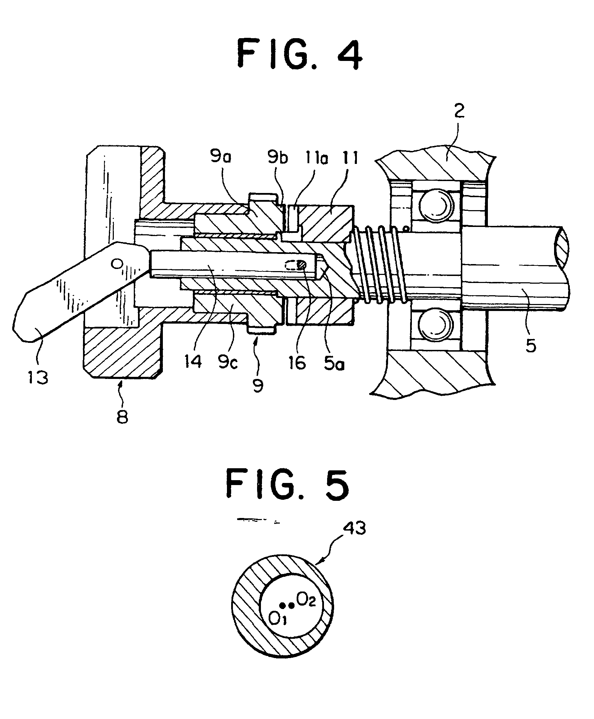

An axle 33 of the lower roller 30 is directly supported by the frame 2 by means of bearings 34 and a third gear 32 is removably secured to the inner end of the axle 33 and held in engagement with a fourth gear 41 removably secured to the corresponding end of an axle 42 of an upper roller 40. The axle 42 of the upper roller 40 is borne in the inside of a corresponding sleeve 43 by means of bearings 44, 44, which sleeve 43 is rotatably supported by part of the frame 2. As shown in FIG. 5, the center O₁ of the inner bore and the center O₂ of the outer periphery of the sleeve 43 are displaced from each other so that the axles 42, 42 of the upper roller 40 can be vertically moved within the eccentricity of the sleeve 43 to adjust the gap between the upper and lower rollers 40 and 30.

In the illustrated embodiment, the sleeve 43 is provided at the inner end thereof with a worm gear 45, whereas the frame 2 is provided at a part thereof with a worm 46 that is held in mesh with the worm gear 45. The top of the worm 46 is projecting out of the frame 2 and provided with an adjusting rod insertion hole 46a. Each of the sleeves 43 is provided at the center of its peripheral surface with engaging recesses 43a that are peripherally arranged at regular intervals and a set screw 47 is screwed through the wall of the frame 2 at a portion corresponding to the engaging recesses 43a. For regulating the gap between the upper and lower rollers 40 and 30, the set screw 47 is unscrewed to release its engagement with the engaging recess 43a of the sleeve 43 and the worm 46 is rotated by means of an adjusting rod (not shown) in order to rotate the sleeve 43 by a desired angle by way of the worm gear 45, then the set screw 47 is screwed in once again to bring it into engagement with corresponding one of the engaging recesses 43a so as to hold the rotated angle of the sleeve 43 so that the upper and lower rollers 40 and 30 are separated by the newly selected distance.

Such an adjustment of the distance between the upper and lower rollers 40 and 30 is possible so long as the third gear 32 and the fourth gear 41 are in engagement.

With the embodiment of wire rolling apparatus having a configuration as described above, rotary force is transmitted from a drive source (not shown) to the main shaft 5 by way of the timing belt 3 and the main gear 4. As the main shaft 5 rotates, it drives the first gear 9 to rotate so long as the pawl 9b of the first gear 9 and the engaging pawl 11a of the coupling wheel 11 are held in mesh with each other. As the first gear 9 is rotated, the corresponding handwheel 8 is also rotated.

The rotation of the first gear 9 is transmitted to the second gear 31 by way of the intermediate gear 20 to drive the lower roller 30 to rotate. The rotation of the lower roller 30 is transmitted to the fourth gear 41 engaging with the third gear 32 that is rigidly fitted to the corresponding end of the corresponding axle 33 of lower roller 30 so that the upper roller 40 is synchronously driven to rotate.

Thus, a synthetic resin monofilament (not shown) is made to pass through the gap between the upper and lower rollers 40 and 30 to deform it to show an elliptic cross section and then produce a series of continuous engaging elements of a slide fastener.

Assuming that a predetermined operation of rolling a monofilament is over and a new monofilament having a diameter different from that of the former monofilament has to be processed, the rolling apparatus 1 is temporarily slowed down and the relevant maneuvering lever 13 pivotally supported on the handwheel 8 is turned and raised until its cam surface 13a presses the corresponding end of the plunger 14 to move it to slide toward the main gear 4 in the blind hole 5a of the main shaft 5. The engagement of the engaging pawl 11a of the coupling wheel 11 linked to the plunger 14 by way of the link pin 15 and the pawl 9b arranged on the opposite surface of the first gear 9 is released to disconnect only one coupling portion 7 of the maneuvering lever 13 while the coupling portion 7 of the other maneuvering lever 13 remains in a connected state.

When the one coupling portion 7 is disconnected, the bolt 22 tightly holding the intermediate gear 20 is loosened and moved in the oblong hole 21a of the support member 21 to release the engagement of the first gear 9 and the second gear 31. Now, any of the second through fourth gears 31, 32, 41 may be replaced if necessary. If none of the gears have to be replaced and only the gap between the upper and lower rollers 40 and 30 needs to be changed, the worm 46 is rotated to drive the worm gear 45 and the sleeve 43 having the center of its inner bore and that of its outer periphery eccentrically arranged to rotate by a desired angle. With this rotation, the vertical position of the bearings 44, 44 of the upper roller 40 is changed. Once the desired gap is obtained between the rollers, the set screw 47 is screwed in to bring it in mesh with an appropriate one of the engaging recesses 43a formed on the peripheral surface of the corresponding sleeve 43 in order to securely hold the sleeve 43 in position.

After completing the replacing or regulating operation, the intermediate gear 20 is moved along the oblong hole 21a of the support member 21 to make the first gear 9 and the second gear 31 engage with each other and then the bolt 22 is screwed in to securely hold the intermediate gear 20 in position. Thereafter, the maneuvering lever 13 pivotally supported on the handwheel 8 is rotated to lie flat in the groove 10 of the handwheel 8 so that the coupling wheel 11 is moved toward the pawl 9b of the first gear 9 by the resilient force of compression spring 12 and the engaging pawl 11a of the coupling wheel 11 comes into engagement with the pawl 9b of the first gear 9. Now, the rotation of the main shaft 5 is once again transmitted to the first gear 9 and the operation of rolling a monofilament having the different diameter can be started.

For replacing the existing monofilament spool with a new one, the maneuvering lever 13 is operated in a manner as described above to disconnect the related coupling portion 7 and the corresponding handwheel 8 is manually rotated to rotate the upper and lower rollers 40 and 30 in order to introduce the leading end a new monofilament into the gap between the upper and lower rollers 40 and 30.

Thus, the handwheel 8 and the main shaft 5 is functionally disconnected at the time of the replacing or regulating operation so that the handwheel 8 can be maneuvered lightly and easily to perform the replacing or regulating operation smoothly and quickly.

While the coupling portion 7 is described above as an engaging/disengaging mechanism where the engaging pawl 11a of the coupling wheel 11 is engaged with or disengaged from the pawl 9b of the first gear 9, it is not limited thereto and it may be replaced by an interrupting mechanism where a pair of discs may be brought into frictional contact or separated from each other.

## Claims

1. A wire rolling apparatus comprising a rotary drive system having a pair of hand wheels (8; 8) as part thereof and intermediate gears (20, 20) for transmitting the driving rotation from a drive source to laterally arranged pairs of upper and lower rollers (40 and 30) by way of said intermediate gears (20, 20), wherein:
said rotary drive system is constituted by a pair of laterally arranged drive system components and the revolution of a single main shaft (5) is transmitted to said rotary drive system components by way of a main gear (4);
said hand wheels (8, 8) are connected to said main shaft (5) by way of respective coupling portions (7, 7); and
each of said hand wheels (8, 8) is provided with an interrupting means for interrupting the connection between the corresponding coupling portion (7) and the main shaft (5)
**characterized in that**
pairs of said laterally arranged upper and lower rollers (40 and 30) are coupled/uncoupled selectively to said main shaft (5) and **in that** an uncoupled pair of said upper and lower rollers (40 and 30) is rotatable manually by means of said hand wheels (8, 8).

2. A wire rolling apparatus according to claim 1, **characterized in that** each of the coupling portions (7, 7) has an interrupting mechanism realized by the mutual engagement of a gear wheel (9) rigidly secured to said main shaft (5) and a coupling wheel (11) slidable on said main shaft (5); and
each of said interrupting means comprises a maneuvering lever (13) adapted to abut an end of a plunger (14) slidable along the axis of the corresponding handwheel (8) in order to reciprocally move said plunger (14) along said axis.

3. A wire rolling apparatus according to claim 2, **characterized in that** said maneuvering lever (13) is coupled to said handwheel (8) by means of a pin and the surface of said maneuvering lever (13) abutting the plunger (14) is realized in the form of a cam surface (13a), and said plunger (14) as well as said coupling wheel (11) are urged toward said maneuvering lever (13).

4. A wire rolling apparatus according to claim 1, **characterized in that** the roller shaft (42 or 33) of at least one of said upper and lower rollers (40, 30) is rotatably supported by an eccentric member; and the vertical relative positions of said upper and lower rollers (40, 30) are regulated by rotating said eccentric member.

5. A wire rolling apparatus according to claim 4, **characterized in that** said eccentric member is composed of a sleeve (43) which is supported by the frame (2) of the rolling apparatus (1) so as to be rotatable around a horizontal axis and has the axis of the internal bore for receiving said roller shaft (42 or 33) by way of respective bearings (44 or 33a) and the axis of the external contour eccentrically arranged relative to each other.

6. A wire rolling apparatus according to claim 5, **characterized in that** said sleeve (43) has a worm gear (45) at an end thereof and a worm (46) is provided which is rigidly secured to said frame (2) and held in engagement with said worm gear (45) to rotate it by a desired angle.

## Patentansprüche

1. Drahtwalzvorrichtung umfassend:
ein Drehantriebssystem mit einem Paar Handräder (8, 8) als Teil davon und Zwischengetriebe (20, 20) zum Übertragen der Antriebsdrehung von einer Antriebsquelle auf seitlich angeordneten Paare oberer und unterer Walzen (40 und 30) durch das Zwischengetriebe (20, 20), wobei:
das Drehantriebssystem durch ein Paar seitlich angeordneter Antriebssystemkomponenten gebildet ist und die Umdrehung einer einzelnen Hauptwelle (5) durch ein Hauptgetriebe (4) auf die Drehantriebssystemkomponenten übertragen wird,
die Handräder (8, 9) durch jeweilige Kuppelabschnitte (7, 7) mit der Hauptwelle (5) verbunden sind, und
jedes der Handräder (8, 9) mit einem Unterbrechungsmittel zum Trennen der Verbindung zwischen dem entsprechenden Kuppelabschnitt (7) und der Hauptwelle (5) bereitgestellt ist,
**dadurch gekennzeichnet, dass**
Paare der seitlich angeordneten oberen und unteren Walzen (40 und 30) wahlweise mit und von der Hauptwelle (5) ver- und ausgekuppelt werden und dass ein ausgekuppeltes Paar der oberen und unteren Walzen (40 und 30) mittels Handrädern (8, 8) manuell drehbar ist.

2. Drahtwalzvorrichtung nach Anspruch 1, **dadurch gekennzeichnet, dass** jeder der Kuppelabschnitte (7, 7) mit einem Unterbrechungsmechanismus ausgestattet ist, der durch den gegenseitigen Eingriff eines Getrieberades (9), das starr an der Hauptwelle (5) befestigt ist, und eines Kuppelrades (11) bewirkt wird, das verschiebbar auf der Hauptwelle (5) befestigt ist; und jedes der Unterbrechungsmittel einen Betätigungshebel (13) umfasst, der gegen ein Ende eines Kolbens (14) stößt, der entlang der Achse des entsprechenden Handrades verschiebbar ist, um den Kolben (14) entlang der Achse vor und zurück zu bewegen.

3. Drahtwalzvorrichtung nach Anspruch 2, **dadurch gekennzeichnet, dass** der Betätigungshebel (13) durch einen Stift mit dem Handrad (8) verbunden ist und die Oberfläche des Betätigungshebels (13), der gegen den Kolben (14) stößt, als Nockenoberfläche (13a) ausgeführt ist, und der Kolben (14) wie auch das Kuppelrad (11) gegen den Betätigungshebel (13) gedrückt werden.

4. Drahtwalzvorrichtung nach Anspruch 1, **dadurch gekennzeichnet, dass** die Walzenwelle (42 oder 33) mindestens einer der oberen und unteren Walzen (40, 30) drehbar von einem exzentrischen Element getragen wird und die vertikalen relativen Positionen der oberen und unteren Walzen (40, 30) durch Drehen des exzentrischen Elementes verstellbar sind.

5. Drahtwalzvorrichtung nach Anspruch 4, **dadurch gekennzeichnet, dass** das exzentrische Element aus einer (43) gebildet ist, die von dem Rahmen (2) der Walzvorrichtung (1) getragen wird, so dass sie um eine horizontale Achse drehbar ist, und mit der Achse der Innenbohrung zur Aufnahme der Walzenwelle (42 oder 33) durch jeweilige Lager (44 oder 33a) und der Achse der Außenkontur, die exzentrisch relativ zu einander angeordnet sind, ausgestattet ist.

6. Drahtwalzvorrichtung nach Anspruch 5, **dadurch gekennzeichnet, dass** die Hülle (43) an einem ihrer Enden mit einem Schneckenrad (45) ausgestattet ist und eine Schnecke (46) bereitgestellt ist, die starr an dem Rahmen (2) befestigt ist und mit dem Schneckengetriebe (45) in Eingriff gehalten wird, um es um einen bestimmten Winkel zu drehen.

## Revendications

1. Dispositif de laminage de fils comprenant un système d'entraînement rotatif comportant une paire de volants à main (8, 8) et des engrenages intermédiaires (20, 20) pour transmettre la rotation d'entraînement d'une source d'entraînement à des paires, agencées latéralement, de galets supérieurs et inférieurs (40 et 30) au moyen desdits engrenages intermédiaires (20, 20), dans lequel:
ledit système d'entraînement rotatif est constitué d'une paire de composants de système d'entraînement agencés latéralement et la rotation d'un seul arbre principal (5) est transmise auxdits composants de système d'entraînement rotatif au moyen d'une roue d'engrenage principale (4);
lesdits volants à main (8, 8) sont connectés audit arbre principal (5) au moyen de parties d'accouplement respectives (7, 7); et
chacun desdits volants à main (8, 8) est pourvu d'un moyen d'interruption pour interrompre la connexion entre la partie d'accouplement (7) correspondante et l'arbre principal (5),
**caractérisé en ce que** les paires desdits galets supérieurs et inférieurs agencés latéralement (40 et 30) sont accouplées/désaccouplées sélectivement audit arbre principal (5) et **en ce qu'**une paire non accouplée desdits galets supérieurs et inférieurs (40 et 30) peut être mise en rotation manuellement au moyen desdits volants à main (8, 8).

2. Dispositif de laminage de fils selon la revendication 1, **caractérisé en ce que** chacune des parties d'accouplement (7, 7) a un mécanisme d'interruption réalisé par l'engrènement mutuel d'une roue d'engrenage (9) fixée de manière rigide audit arbre principal (5) et d'une roue d'accouplement (11) pouvant coulisser sur ledit arbre principal (5); et
chacun desdits moyens d'interruption comprend un levier de manoeuvre (13) adapté pour buter contre une extrémité d'un piston (14) pouvant coulisser le long de l'axe du volant à main (8) correspondant afin de déplacer en va-et-vient ledit piston (14) le long dudit axe.

3. Dispositif de laminage de fils selon la revendication 2, **caractérisé en ce que** ledit levier de manoeuvre (13) est accouplé audit volant à main (8) au moyen d'une goupille et la surface dudit levier de manoeuvre (13) butant contre le piston (14) est réalisée sous la forme d'une surface de came (13a), et ledit piston (14) ainsi que ladite roue d'accouplement (11) sont poussés vers ledit levier de manoeuvre (13).

4. Dispositif de laminage de fils selon la revendication 1, **caractérisé en ce que** l'arbre à galet (42 ou 33) d'au moins l'un desdits galets supérieurs et inférieurs (40, 30) est supporté à rotation par un élément excentrique, et les positions verticales relatives desdits galets supérieurs et inférieurs (40, 30) sont réglées en faisant tourner ledit élément excentrique.

5. Dispositif de laminage de fils selon la revendication 4, **caractérisé en ce que** ledit élément excentrique est composé d'un manchon (43) qui est supporté par le bâti (2) du dispositif de laminage (1) de manière à être rotatif autour d'un axe horizontal et a l'axe de l'alésage intérieur pour recevoir ledit arbre à galet (42 ou 33) au moyen de roulements respectifs (44 ou 33a) et l'axe du contour extérieur placés excentriquement l'un par rapport à l'autre.

6. Dispositif de laminage de fils selon la revendication 5, **caractérisé en ce que** ledit manchon (43) comporte un engrenage à vis sans fin (45) en une de ses extrémités et une vis sans fin (46) est prévue, qui est fixée de manière rigide audit bâti (2) et maintenue en prise avec ledit engrenage à vis sans fin (45) pour le faire tourner d'un angle voulu.
